# EUROPEAN PATENT APPLICATION

(11) **EP 2 827 430 A1**
(43) Date of publication of application: **21.01.2015**
(21) Application number: 13177159.4
(22) Date of filing: 19.07.2013
(51) Int. Cl.: H01M 10/052, H01M 10/0567, H01M 10/0568, H01M 10/0569

(54) **Use of lithium alkoxyborates and lithium alkoxyaluminates as conducting salts in electrolytes of lithium ion batteries**

(71) Applicant: BASF SE, 67056 Ludwigshafen (DE); Albert-Ludwigs-Universität Freiburg, 79085 Freiburg (DE)
(72) Inventor: Garsuch, Arnd, Dr., 67063 Ludwigshafen (DE); Semrau, Günter, Dr., 67063 Ludwigshafen (DE); Schmidt, Michael, Dr., 64342 Seeheim-Jugenheim (DE); Krossing, Ingo, Prof.Dr., 79114 Freiburg (DE); Eiden, Philipp, 79104 Freiburg (DE); Rohde, Michael, 79106 Freiburg (DE); Hernandez, Lucia Alvarez, 79104 Freiburg (DE); Bitguel, Fadime, 79356 Freiburg (DE); Leppert, Verena, 79104 Freiburg (DE)

(57) **Abstract**

An electrolyte composition (A) containing
(i) at least one aprotic organic solvent,
(ii) at least one compound of formula (I) 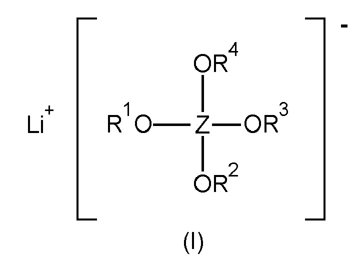 wherein Z is Al or B;
(iii) optionally at least one conducting salt different from the compound of formula (I), and
(iv) optionally at least one further additive.

## Description

The present invention relates to an electrolyte composition (A) containing lithium alkoxyborates and lithium alkoxyaluminates, to the use of lithium alkoxyborates and lithium alkoxyaluminates as conducting salt in electrochemical cells and to electrochemical cells comprising the electrolyte composition (A).

Storing energy has long been a subject of growing interest. Electrochemical cells, for example batteries or accumulators, can serve to store electrical energy. Lithium ion batteries have attracted particular interest since they are superior to the conventional batteries in several technical aspects. For instance, they provide higher energy densities than accumulators based on lead or comparatively noble heavy metals.

In electrochemical cells the ions participating in the electrochemical reaction taking place in the electrochemical cell have to be transferred. For this purpose conducting salts are present in the electrochemical cell. In lithium ion batteries the charge transfer is performed by lithium ions, i.e. lithium ion containing conducting salts are present.

Salts used as conducting salts in lithium ion batteries should meet several requirements like good solubility in the solvent used and electrochemical and thermal stability. The solvated ions should have high ion mobility and low toxicity and should be economic with regard to price.

It is difficult to meet all requirements at the same time. For example, if the diameter of the anion of the salt is increased to decrease the association of the ions, the conductivity of an electrolyte composition containing said salt usually decreases due to the lower mobility of the enlarged anion. Furthermore, the solubility of such salts frequently decreases considerably. The conducting salt best suited has to be determined for every particular application. In regard to lithium ion batteries not all lithium salts are suited, in particular not for the application in high-capacity lithium ion batteries in automotive engineering. The most simple lithium salts are the halides like LiF and LiCl or the oxide LiO₂ which are easily available at low costs. However, their solubility in non-aqueous solvents as used for lithium ion batteries is poor. The preparation of complex lithium salts is laborious and the complex lithium salts are expensive. Lithium salts of strong Lewis acids like aluminum halides (e.g. LiAlF₄, and LiAlCl₄) are not suited, since these salts react with the non-aqueous solvents and with other battery components. Lithium salts derived from strong Brönstedt acids are e.g. lithium trilfluoromethane sulfonate (LiOTF) and lithium bis(trifluoromethyl sulfonyl) imide (LiTFSI). Both are thermally and electrochemically very stable, are non-toxic and insensitive against hydrolysis. But their anions are very reactive and cause corrosion of the materials used as current collector like aluminum.

Lithium salts comprising complex anions with lower Lewis acidity have been developed like lithium perchlorate (LiClO₄), lithium tetrafluoroborate (LiBF₄), lithium hexafluoroarsenate (LiAsF₆) and lithium hexafluorophosphate (LiPF₆). These salts show very good solubility and electrochemical stability. But the perchlorate anion (ClO₄⁻) is highly reactive; LiBF₄ has a very low conductivity, and LiAsF₆ cannot be used commercially due to the toxicity of the products of the reaction of As(V) to As(III) and As(0). The commonly used LiPF₆ is a compromise, too. It is thermally not very stable and very sensitive to hydrolysis, but shows high conductivity and electrochemical stability and leads to good passivation of the electrodes.

It was thus an object of the present invention to provide lithium conducting salts for electrolytes for electrochemical cells, in particular for lithium ion batteries showing improved properties in respect to at least one of the following requirements: high solubility, high electrochemical and thermal stability, low toxicity, high ion mobility, high compatibility with the other components of the electrolyte, low reactivity, little or no corrosive effect on the current collector materials, little or no adverse interactions with electrode materials like binders, conductive carbon blacks and electrode active materials, e.g. transition metal oxides or graphite, good wetting properties and low price for non-aqueous electrolyte compositions with improved quality and life time.

This object is achieved by an electrolyte composition (A) containing
(i) at least one aprotic organic solvent,
(ii) at least one compound of formula (I), 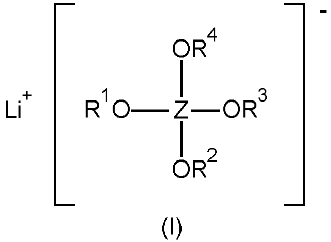 wherein
   Z is Al or B;
   R¹, R², R³, and R⁴ are selected independently from each other from C(O)R⁵, C₁-C₁₀ alkyl, C₂-C₁₀ alkenyl, C₂-C₁₀ alkinyl, C₃-C₁₀ cycloalkyl, C₆-C₁₄ aryl and C₅-C₁₄ heteroaryl, wherein alkyl, alkenyl, alkinyl, cycloalkyl, aryl, and heteroaryl may be substituted by one or more F, and/or by one or more optionally fluorinated groups selected from C₁-C₄ alkyl, C₂-C₄ alkenyl, C₂-C₄ alkinyl, phenyl, and benzyl,
   or R¹ and R² are selected independently from each other from C(O) and C₁-C₃ alkylene and form together with the joining group OZO a 5- to 7-membered hetero cycle, wherein alkylene may be substituted by one or more F, and/or by one or more optionally fluorinated groups selected from C₁-C₄ alkyl, phenyl, and benzyl, and R³ and R⁴ are selected as defined above,
   R⁵ is selected from C₁-C₁₀ alkyl, C₂-C₁₀ alkenyl, C₂-C₁₀ alkinyl, C₃-C₁₀ cycloalkyl, C₆-C₁₄ aryl and C₅-C₁₄ heteroaryl, wherein alkyl, alkenyl, alkinyl, cycloalkyl, aryl, and heteroaryl may be substituted by one or more F, and/or by one or more optionally fluorinated groups selected from C₁-C₄ alkyl, phenyl, and benzyl, and
   wherein at least one of R¹, R², R³, and R⁴ carries at least one F;
(iii) optionally at least one conducting salt different from the compound of formula (I), and
(iv) optionally at least one further additive.

This object is also achieved by the use of the compounds of formula (I) as conducting salts in electrolytes for electrochemical cells and by electrochemical cells comprising the electrolyte composition (A).

Lithium ion batteries comprising the inventive electrolyte composition containing a compound of formula (I) instead of standard conducting salt LiPF₆ show improved capacities after storing the lithium ion batteries in the discharged state at high temperatures. The inventive use of the additives of formula (I) does not lead to corrosive decomposition products. The additives of formula (I) do not thermal decompose at usual operating temperatures. The aluminates of formula (I) have a lower tendency to hydrolyses, the borates of formula (I) are stable against water which was proven by NMR studies. The compounds of formula (I) have the advantage of showing high conductivities even in low polar solvents.

In the following the invention is described in detail.

The term "C₁-C₁₀ alkyl" as used herein means a straight or branched saturated hydrocarbon group with 1 to 10 carbon atoms having one free valence and includes, e.g., methyl, ethyl, n-propyl, isopropyl, n-butyl, sec-butyl, isobutyl, tert-butyl, n-pentyl, iso-pentyl, 2,2-dimethylpropyl, n-hexyl, iso-hexyl, 2-ethyl hexyl, n-heptyl, iso-heptyl, n-octyl, iso-octyl, n-nonyl, n-decyl and the like. Preferred are C₁-C₆ alkyl groups, more preferred C₁-C₄ alkyl groups and most preferred are 2-propyl, methyl and ethyl.

The term "C₃-C₁₀ cycloalkyl" as used herein means a cyclic saturated hydrocarbon group with 3 to 10 carbon atoms having one free valence and includes, e.g. cyclopropyl, cyclobutyl, cyclopentyl and cyclohexyl. Preferred are C₃-C₆ cycloalkyl.

The term "C₂-C₁₀ alkenyl" as used herein refers to an unsaturated straight or branched hydrocarbon group with 2 to 10 carbon atoms having one free valence, wherein the hydrocarbon group contains at least one C-C double bond. C₂-C₁₀ alkenyl includes for example ethenyl, 1-propenyl, 2-propenyl, 1-n-butenyl, 2-n-butenyl, iso-butenyl, 1-pentenyl, 1-hexenyl and the like. Preferred are C₂-C₆ alkenyl, more preferred are C₂-C₄ alkenyl, in particular ethenyl and propenyl (allyl).

The term "C₂-C₁₀ alkynyl" as used herein refers to an unsaturated straight or branched hydrocarbon group with 2 to 10 carbon atoms having one free valence, wherein the hydrocarbon group contains at least one C-C triple bond. C₂-C₁₀ alkynyl includes for example ethynyl, 1-propynyl, 2-propynyl, 1-n-butinyl, 2-n-butynyl, iso-butinyl, 1-pentynyl, 1-hexynyl and the like. Preferred are C₂-C₆ alkynyl, more preferred are C₂-C₄ alkynyl.

The term "C₅-C₁₄ aryl" as used herein denotes an aromatic 5- to 14-membered hydrocarbon cycle having one free valence. Examples of C₅-C₁₄ aryl are phenyl, naphtyl and anthracyl, preferred is phenyl.

The term "C₅-C₁₄ hetero aryl" as used herein denotes an aromatic 5- to 14-membered hydrocarbon cycle having one free valence wherein at least one C-atom is replaced by N, O or S. Preferred are C₅-C₇ hetero aryl. Examples of C₅-C₁₄ hetero aryl are pyrrolyl, furanyl, thiophenyl, pyridinyl, pyranyl, thiopyranyl and the like.

The term "C₁-C₃ alkylene" as used herein denotes a saturated hydrocarbon group with one to three carbon atoms having two free valences. The alkylene groups are derived from the respective alkyl groups and are also named alkanediyl. Examples are methylene (CH₂), 1,2-ethylene (CH₂CH₂), 1,3-propylene (CH₂CH₂CH₂), and 1,2-propylene (CH₂CHCH₃).

The term "C(O)" as used herein denotes the carbonyl group C=O.

In some embodiments R¹ and R² are selected independently from each other from C(O) and C₁-C₃ alkylene and form together with the joining group OZO a 5- to 7-membered hetero cycle which may be substituted by one or more F, C₁-C₄ alkyl, and/or C₁-C₄ alkyl substituted by one or more F. Examples for such compounds are 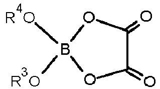 wherein R¹ and R² are both C(O) and form with the joining OBO-group a 5 membered heterocycle, and 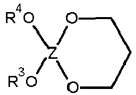 wherein R¹ is methylene and R² is ethylene.

The term "wherein at least one of R¹, R², R³, and R⁴ carries at least one F" means that at least one of the substituents R¹, R², R³, and R⁴ is substituted by at least one F. It is preferred if at least one of R¹, R², R³, and R⁴ contains at least one CF₃-group.

The term "benzyl" means the group CH₂-phenyl.

Preferred compounds of formula (I) are compounds of formula (I) wherein R¹, R², R³, and R⁴ are independently selected from C₁-C₆ alkyl and C(O)C₁-C₆ alkyl, wherein at least one alkyl is substituted by one or more F,
or wherein R¹ and R² are selected independently from each other from C(O) and C₁-C₃ alkylene and form together with the joining group OZO a 5- to 7-membered hetero cycle, wherein alkylene may be substituted by one or more F, C₁-C₄ alkyl, and/or C₁-C₄ alkyl substituted by one or more F, and R³ and R⁴ are selected from optionally fluorinated C₁-C₆ alkyl and C(O)C₁-C₆ alkyl, and wherein at least one of R¹, R², R³, and R⁴ carries at least one F.

Even more preferred are compounds of formula (I) wherein at least one of R¹, R², R³, and R⁴ contains at least one CF₃-group. In particular preferred R¹, R², R³, and R⁴ are selected from CH₂CF₃, CH(CH₃)CF₃, CH(CF₃)₂, C(CH₃)(CF₃)₂, and C(CF₃)₃.

The central atom Z of the compounds formula (I) may be Al or B.

According to one embodiment Z is B. For such compounds of formula (I) it is preferred if
- R¹ and R²: are selected independently from each other from C(O) and C₁-C₃ alkylene and form together with the joining group OZO a 5- to 7-membered hetero cycle, wherein alkylene may be substituted by one or more F, and/or by one or more optionally fluorinated groups selected from C₁-C₄ alkyl, phenyl, and benzyl, and
- R³ and R⁴: are selected independently from each other from C(O)R⁵, C₁-C₁₀ alkyl, C₂-C₁₀ alkenyl, C₂-C₁₀ alkynyl, C₃-C₁₀ cycloalkyl, C₆-C₁₄ aryl and C₅-C₁₄ heteroaryl, wherein alkyl, alkenyl, alkynyl, cycloalkyl, aryl, and heteroaryl may be substituted by one or more F, and/or by one or more optionally fluorinated groups selected from C₁-C₄ alkyl, C₂-C₄ alkenyl, C₂-C₄ alkynyl, phenyl, and benzyl, preferably R³ and R⁴ are selected independently from each other from optionally fluorinated C₁-C₆ alkyl, and
- R⁵: is selected from C₁-C₁₀ alkyl, C₂-C₁₀ alkenyl, C₂-C₁₀ alkynyl, C₃-C₁₀ cycloalkyl, C₆-C₁₄ aryl and C₅-C₁₄ heteroaryl, wherein alkyl, alkenyl, alkynyl, cycloalkyl, aryl, and heteroaryl may be substituted by one or more F, and/or by one or more optionally fluorinated groups selected from C₁-C₄ alkyl, phenyl, and benzyl, and
wherein at least one of R¹, R², R³, and R⁴ carries at least one F.

Preferred compounds of formula (I) wherein Z is B are compounds of formula (I) wherein
- R¹ and R²: are selected independently from each other from C(O) and C₁-C₃ alkylene and form together with the joining group OZO a 5- to 7-membered hetero cycle, wherein alkylene may be substituted by one or more F, and/or by one or more optionally fluorinated groups selected from C₁-C₄ alkyl, phenyl, and benzyl, and
- R³ and R⁴: are selected independently from each other from optionally fluorinated C₁-C₆ alkyl, in particular preferred R³ and R⁴ are the same, and
wherein at least one of R¹, R², R³, and R⁴ carries at least one F.

Within this embodiment it is further preferred if at least one of R¹, R², R³, and R⁴ contains at least one CF₃-group. In particular preferred R³, and R⁴ are selected from CH₂CF₃, CH(CH₃)CF₃, CH(CF₃)₂, C(CH₃)(CF₃)₂, and C(CF₃)₃. Even more preferred R¹ and R² are C(O)C(O) forming a 5 membered cycle with OBO and R³ and R⁴ are selected from CH₂CF₃, CH(CH₃)CF₃, CH(CF₃)₂, C(CH₃)(CF₃)₂, and C(CF₃)₃.

According to another embodiment Z is Al. For compounds of formula (I) wherein the central atom Z is Al it is preferred if
- R¹, R², R³, and R⁴: are selected independently from each other from C(O)R⁵, C₁-C₁₀ alkyl, C₂-C₁₀ alkenyl, C₂-C₁₀ alkynyl, C₃-C₁₀ cycloalkyl, C₆-C₁₄ aryl and C₅-C₁₄ heteroaryl, wherein alkyl, alkenyl, alkynyl, cycloalkyl, aryl, and heteroaryl may be substituted by one or more F, and/or by one or more optionally fluorinated groups selected from C₁-C₄ alkyl, C₂-C₄ alkenyl, C₂-C₄ alkynyl, phenyl, and benzyl, preferably R¹, R², R³, and R⁴ are selected independently from each other from optionally fluorinated C₁-C₆ alkyl,
- R⁵: is selected from C₁-C₁₀ alkyl, C₂-C₁₀ alkenyl, C₂-C₁₀ alkynyl, C₃-C₁₀ cycloalkyl, C₆-C₁₄ aryl and C₅-C₁₄ heteroaryl, wherein alkyl, alkenyl, alkynyl, cycloalkyl, aryl, and heteroaryl may be substituted by one or more F, and/or by one or more optionally fluorinated groups selected from C₁-C₄ alkyl, phenyl, and benzyl, and
wherein at least one of R¹, R², R³, and R⁴ carries at least one F.

Preferred compounds of formula (I) wherein Z is Al are compounds of formula (I) wherein
- R¹, R², R³, and R⁴: are selected independently from each other from C₁-C₆ alkyl wherein at least one alkyl is substituted by one or more F. Even more preferred R¹, R², R³, and R⁴ are the same.

Within this embodiment it is further preferred if at least one of R¹, R², R³, and R⁴ contains at least one CF₃-group. Even more preferred R¹, R², R³, and R⁴ are selected from CH₂CF₃, CH(CH₃)CF₃, CH(CF₃)₂, C(CH₃)(CF₃)₂, and C(CF₃)₃.

Especially preferred salts of formula (I) are Li[B(OC(O)C(O)O)(OCH(CF₃)₂)₂], Li[B(OCH(CF₃)₂)₄], Li[B(OCH₂CF₃)₄], Li[Al(OCH(CF₃)₂)₄], Li[Al(OC(CH₃)(CF₃)₂)₄], and Li[Al(OC(CF₃)₃)₄].

The preparation of compounds of formula (I) is known to the person skilled in the art. compounds of formula (I) with Z is Al may prepared by the reaction of LiAlH₄ or LiBH₄ and the appropriate alcohols as described in I. Krossing, Chem. Eur. J. (2001) Vol. 7 p. 490 and S. M. Ivanova et al., Chem. Eur. J. (2001) Vol. 7, p. 503. These may be further reacted by ligand exchange The preparation of compounds formula (I) with Z is B can be found in I. Krossing, Dalton Trans. (2011) Vol. 40 p. 8114

The concentration of the at least one compound of formula (I) in the electrolyte composition (A) is usually 0.01 to 40 wt.-%, preferred 0.1 to 30 wt.-%, more preferred 0.5 to 25 wt.-%, and in particular 1 to 20 wt.-%, based on the total weight of the electrolyte composition (A).

The electrolyte composition (A) further contains at least one aprotic organic solvent (i). The at least compound of formula (I) present in the electrolyte is usually solvated in the aprotic organic solvent(s) (i). Preferably electrolyte composition (A) contains at least two aprotic organic solvents (i) and more preferred at least three aprotic organic solvents (i). According to one embodiment the electrolyte composition (A) may contain up to ten aprotic organic solvents (i).

The at least one aprotic organic solvent (i) is preferably selected from
(a) cyclic and noncyclic organic carbonates, which may be partly halogenated,
(b) di-C₁-C₁₀-alkylethers, which may be partly halogenated,
(c) di-C₁-C₄-alkyl-C₂-C₆-alkylene ethers and polyethers, which may be partly halogenated,
(d) cyclic ethers, which may be partly halogenated,
(e) cyclic and acyclic acetales and ketales, which may be partly halogenated,
(f) orthocarboxylic acids esters, which may be partly halogenated,
(g) cyclic and noncyclic esters of carboxylic acids, which may be partly halogenated,
(h) Cyclic and noncyclic sulfones, which may be partly halogenated,
(i) Cyclic and noncyclic nitriles and dinitriles, which may be partly halogenated, and
(j) Ionic liquids, which may be partly halogenated.

The aprotic organic solvents (a) to (j) may be partly halogenated, e.g. they may be partly fluorinated, partly chlorinated or partly brominated, and preferably they may be partly fluorinated. "Partly halogenated" means, that one or more H of the respective molecule is substituted by a halogen atom, e.g. by F, Cl or Br. Preference is given to the substitution by F. The at least one solvent (i) may be selected from partly halogenated and non-halogenated aprotic organic solvents (a) to (j), i.e. the electrolyte composition may contain a mixture of partly halogenated and non-halogenated aprotic organic solvents.

More preferred the at least one aprotic organic solvent (i) is selected from cyclic and noncyclic organic carbonates (a), di-C₁-C₁₀-alkylethers (b), di-C₁-C₄-alkyl-C₂-C₆-alkylene ethers and polyethers (c) and cyclic und acyclic acetales and ketales (e), even more preferred electrolyte composition (A) contains at least one aprotic organic solvent (i) selected from cyclic and noncyclic organic carbonates (a) and most preferred electrolyte composition (A) contains at least two aprotic organic solvents (i) selected from cyclic and noncyclic organic carbonates (a), in particular electrolyte composition (A) contains at least one cyclic organic carbonate (a) and at least one noncyclic organic carbonate (a) e.g. ethylene carbonate and diethylcarbonate. The aforementioned preferred organic aprotic solvents may be also partly halogenated, preferably partly fluorinated.

Examples of suitable organic carbonates (a) are cyclic organic carbonates according to the general formula (a1), (a2) or (a3) 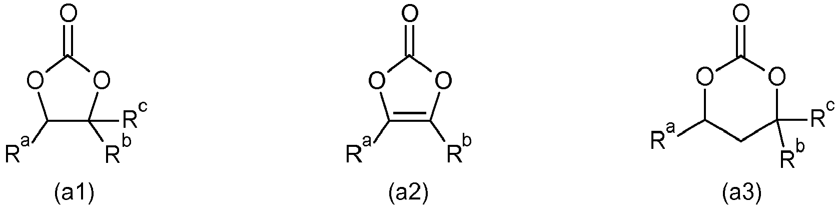 wherein
R^{a}, R^{b} und R^{c} being different or equal and being independently from each other selected from hydrogen; C₁-C₄-alkyl, preferably methyl; F; and C₁-C₄-alkyl substituted by one or more F, e.g. CF₃.

"C₁-C₄-alkyl" is intended to include methyl, ethyl, n-propyl, iso-propyl, n-butyl, iso-butyl, sec.- butyl and tert.-butyl.

Preferred cyclic organic carbonates (a) are of general formula (a1), (a2) or (a3) wherein R^{a}, R^{b} and R^{c} are H. Examples are ethylene carbonate, vinylene carbonate, and propylene carbonate. A preferred cyclic organic carbonate (a) is ethylene carbonate. Further preferred cyclic organic carbonate (a) are difluoroethylene carbonate (a4) and monofluoroethylene carbonate (a5)

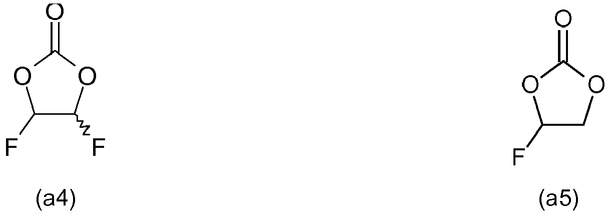

Examples of suitable non-cyclic organic carbonates (a) are dimethyl carbonate, diethyl carbonate, methylethyl carbonate and mixtures thereof.

In one embodiment of the invention the electrolyte composition (A) contains mixtures of non-cyclic organic carbonates (a) and cyclic organic carbonates (a) at a ratio by weight of from 1:10 to 10:1, preferred of from 3:1 to 1:1.

Examples of suitable non-cyclic di-C₁-C₁₀-alkylethers (b) are dimethylether, ethylmethylether, diethylether, diisopropylether, and di-n-butylether.

Examples of di-C₁-C₄-alkyl-C₂-C₆-alkylene ethers (c) are 1,2-dimethoxyethane, 1,2-diethoxyethane, diglyme (diethylene glycol dimethyl ether), triglyme (triethylenglycol dimethyl ether), tetraglyme (tetraethylenglycol dimethyl ether), and diethylenglycoldiethylether.

Examples of suitable polyethers (c) are polyalkylene glycols, preferably poly-C₁-C₄-alkylene glycols and especially polyethylene glycols. Polyethylene glycols may comprise up to 20 mol% of one or more C₁-C₄-alkylene glycols in copolymerized form. Polyalkylene glycols are preferably dimethyl- or diethyl-end capped polyalkylene glycols. The molecular weight M_{w} of suitable polyalkylene glycols and especially of suitable polyethylene glycols may be at least 400 g/mol. The molecular weight M_{w} of suitable polyalkylene glycols and especially of suitable polyethylene glycols may be up to 5 000 000 g/mol, preferably up to 2 000 000 g/mol.

Examples of suitable cyclic ethers (d) are tetrahydrofurane and 1,4-dioxane.

Examples of suitable non-cyclic acetals (e) are 1,1-dimethoxymethane and 1,1-diethoxymethane. Examples for suitable cyclic acetals (e) are 1,3-dioxane and 1,3-dioxolane.

Examples of suitable orthocarboxylic acids esters (f) are tri-C₁-C₄ alkoxy methane, in particular trimethoxymethane and triethoxymethane.

Examples of suitable noncyclic esters of carboxylic acids (g) are ethyl acetate, methyl butanoate, esters of dicarboxylic acids like 1,3-dimethyl propanedioate. An example of a suitable cyclic ester of carboxylic acids (lactones) is γ-butyrolactone.

Examples of suitable noncyclic sulfones (h) are ethyl methyl sulfone and dimethyl sulfone.

Examples of suitable cyclic and noncyclic nitriles and dinitriles (i) are adipodinitrile, acetonitrile, propionitrile, and butyronitrile.

The inventive electrolyte composition (A) may contain at least one conducting salt (iii) different from the at least one compound of formula (I). The conducting salt(s) (iii) optionally present in the electrolyte are usually solvated in the aprotic organic solvent(s) (i). Preferably the conducting salt (iii) is a lithium salt. The conducting salt (iii) is preferably selected from the group consisting of
- Li[F₆₋ₓP(C_{y}F_{2y+1})ₓ], wherein x is an integer in the range from 0 to 6 and y is an integer in the range from 1 to 20;
   Li[B(R^{I})₄], Li[B(R^{I})₂(OR^{II}O)] and Li[B(OR^{II}O)₂] wherein each R^{I} is independently from each other selected from F, Cl, Br, I, C₁-C₄ alkyl, C₂-C₄ alkenyl, and C₂-C₄ alkynyl, wherein alkyl, alkenyl, and alkynyl may be substituted by one or more OR^{III}, wherein R^{III} is selected from C₁-C₆ alkyl, C₂-C₆ alkenyl, and C₂-C₆ alkynyl, and
   (OR^{II}O) is a bivalent group derived from a 1,2- or 1,3-diol, a 1,2- or 1,3-dicarboxlic acid or a 1,2- or 1,3-hydroxycarboxylic acid, wherein the bivalent group forms a 5- or 6-membered cycle via the both oxygen atoms with the central B-atom;
- salts of the general formula Li[X(CₙF₂ₙ₊₁SO₂)ₘ], where m and n are defined as follows:
   m = 1 when X is selected from oxygen and sulfur,
   m = 2 when X is selected from nitrogen and phosphorus,
   m = 3 when X is selected from carbon and silicon, and
   n is an integer in the range from 1 to 20,
- LiClO₄; LiAsF₆; LiCF₃SO₃; Li₂SiF₆; LiSbF₆; LiAlCl₄, lithium tetrafluoro (oxalato) phosphate; and lithium oxalate.

Suited 1,2- and 1,3-diols from which the bivalent group (OR^{II}O) is derived may be aliphatic or aromatic and may be selected, e.g., from 1,2-dihydroxybenzene propane-1,2-diol, butane-1,2-diol, propane-1,3-diol, butan-1,3-diol, cyclohexyl-trans-1,2-diol or naphthalene-2,3-diol which are optionally are substituted by one or more F and/or by at least one straight or branched non fluorinated, partly fluorinated or fully fluorinated C₁-C₄ alkyl group. An example for such 1,2- or 1,3-diol is 1,1,2,2-tetra(trifluoromethyl)-1,2-ethane diol.

Suited 1,2- or 1,3-dicarboxlic acids from which the bivalent group (OR^{II}O) is derived may be aliphatic or aromatic, for example oxalic acid, malonic acid (propane-1,3-dicarboxylic acid), phthalic acid or isophthalic acid, preferred is oxalic acid. The 1,2- or 1,3-dicarboxlic acids are optionally are substituted by one or more F and/or by at least one straight or branched non fluorinated, partly fluorinated or fully fluorinated C₁-C₄ alkyl group.

Suited 1,2- or 1,3-hydroxycarboxylic acids from which the bivalent group (OR^{II}O) is derived may be aliphatic or aromatic, for example salicylic acid, tetrahydro salicylic acid, malic acid, 2-hydroxy acetic acid, which are optionally are substituted by one or more F and/or by at least one straight or branched non fluorinated, partly fluorinated or fully fluorinated C₁-C₄ alkyl group. An example for such 1,2- or 1,3-hydroxycarboxylic acids is 2,2-bis(trifluoromethyl)-2-hydroxy-acetic acid.

Examples of Li[B(R^{I})₄], Li[B(R^{I})₂(OR^{II}O)] and Li[B(OR^{II}O)₂] are LiBF₄, lithium difluoro oxalato borate and lithium dioxalato borate.

Preferably the at least one conducting salt (iii) is selected from LiPF₆, LiBF₄, and LiPF₃(CF₂CF₃)₃, more preferred the conducting salt (iii) is selected from LiPF₆ and LiBF₄, and the most preferred conducting salt (iii) is LiPF₆.

According to one embodiment of the present invention the electrolyte composition contains at least one conducting salt (iii) different from the at least one compound of formula (I). In this case the at least one conducting salt (iii) is usually present at a minimum concentration of at least 0.01 wt.-%, preferably of at least 0.5 wt.-%, more preferred of at least 1 wt.-%, and most preferred of at least 5 wt.-%, based on the total weight of the electrolyte composition. Usually the upper concentration limit for the at least one conducting salt (iii) is 25 wt.-%, based on the total weight of the electrolyte composition. Within this embodiment particular preference is given to electrolyte compositions, wherein the total concentration of the at least one compound of formula (I) (ii) and the at least one conducting salt (iii) together is in the range of from 0.02 to 25 wt.-%, more preferred in the range of from 1 to 22.5 wt.-% and most preferred in the range of from 5 to 20 wt.-%, based on the total weight of the electrolyte composition.

Moreover, the inventive electrolyte composition (A) may contain at least one further additive (iv). The at least one further additive (iv) may be selected from the group consisting of vinylene carbonate and its derivatives, vinyl ethylene carbonate and its derivatives, methyl ethylene carbonate and its derivatives, lithium (bisoxalato) borate, lithium difluoro (oxalato) borate, lithium tetrafluoro (oxalato) phosphate, lithium oxalate, 2-vinyl pyridine, 4-vinyl pyridine, cyclic exo-methylene carbonates, sultones, cyclic and acyclic sulfonates, cyclic and acyclic sulfites, cyclic and acyclic sulfinates, organic esters of inorganic acids, acyclic and cyclic alkanes having a boiling point at 1 bar of at least 36 °C, and aromatic compounds, optionally halogenated cyclic and acyclic sulfonylimides, optionally halogenated cyclic and acyclic phosphate esters, optionally halogenated cyclic and acyclic phosphines, optionally halogenated cyclic and acyclic phosphites including, optionally halogenated cyclic and acyclic phosphazenes, optionally halogenated cyclic and acyclic silylamines, optionally halogenated cyclic and acyclic halogenated esters, optionally halogenated cyclic and acyclic amides, optionally halogenated cyclic and acyclic anhydrides, optionally halogenated organic heterocycles.

Examples of suitable aromatic compounds are biphenyl, cyclohexylbenzene and 1,4-dimethoxy benzene.

Sultones may be substituted or unsubstituted. Examples for suitable sultones are propane sultone (iv a), butane sultone (iv b) and propene sultone (iv c) as shown below:

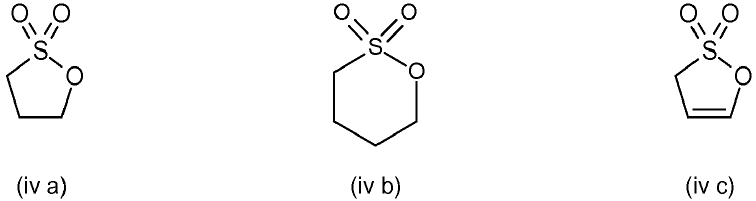

Examples for suitable cyclic exo-methylene carbonates are compound of formula (iv d) 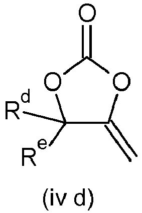 wherein R^{d} and Re may be same or different and are independently from each other selected from C₁-C₁₀ alkyl, and hydrogen. Preferably both R^{d} and R^{e} are methyl. Also preferred both R^{d} and Re are hydrogen. A preferred cyclic exo-methylene carbonate is methylenethylene carbonate.

Furthermore, additive (iv) may be selected from acyclic or cyclic alkanes, preferably alkanes having at a pressure of 1 bar a boiling point of at least 36°C. Examples of such alkanes are cyclohexane, cycloheptane und cyclododecane.

Further compounds suitable as additives (iv) are organic ester of inorganic acids like ethyl ester or methyl ester of phosphoric acid or sulfuric acid.

Usually additive (iv) is selected to be different from the compounds selected as compound of formula (I) (ii) and conducting salt (iii), and from the compounds selected as organic aprotic solvents (i) present in the respective electrolyte composition (A).

According to one embodiment of the present invention the electrolyte composition contains at least one further additive (iv). If one or more further additives (iv) are present in the electrolyte composition (A), the total concentration of further additives (iv) is at least 0.001 wt.-%, preferred 0.005 to 10 wt.-% and most preferred 0.01 to 5 wt.-%, based on the total weight of the electrolyte composition (A).

The inventive electrolyte composition is preferably essentially water free, i.e. the water content of the inventive electrolyte composition is below 100 ppm, more preferred below 50 ppm, most preferred below 30 ppm. The term "ppm" denotes parts per million based on the weight of the total electrolyte composition. Various methods are known to the person skilled in the art to determine the amount of water present in the electrolyte composition. A method well suited is the titration according to Karl Fischer, e.g. described in detail in DIN 51777 or ISO760: 1978.

The electrolyte composition (A) of the inventive lithium ion battery is preferably liquid at working conditions; more preferred it is liquid at 1 bar and 25 °C, even more preferred the electrolyte composition is liquid at 1 bar and -15 °C, most preferred the electrolyte composition is liquid at 1 bar and -30 °C, and in particular preferred the electrolyte composition is liquid at 1 bar and -50 °C.

In a preferred embodiment of the present invention the electrolyte composition contains at least two aprotic solvents (i) selected from cyclic and noncyclic organic carbonates (a), at least one compound of formula (I), at least one conducting salt (ii) selected from LiBF₄ and LiPF₆, and at maximum up to 100 ppm water.

Preference is further given to electrolyte composition (A), wherein the electrolyte composition contains
(i) from 60 to 99.99 wt.-% of the at least one aprotic organic solvent,
(ii) from 0.01 to 40 wt.-% of the at least one compound of formula (I),
(iii) from 0 to 25 wt.-% of the at least one conducting salt different from the at least one compound of formula (I), and
(iv) from 0 to 10 wt.-% of the at least one further additive,
based on the total weight of the electrolyte composition.

Li ion batteries comprising electrolyte composition (A) as described above show increased cycling stability after being stored at elevated temperatures in the discharged state than lithium ion batteries containing an electrolyte composition with LiPF₆ as conductive salt.

A further object of the present invention is the use of the compounds of formula (I) as described above in detail as component (ii) of the inventive electrolyte composition (A) as conducting salt(s) in electrolytes for electrochemical cells. Preferably the electrochemical cell is a lithium ion battery. The at least one compound of formula (I) is usually used by adding the compound(s) of formula (I) to the electrolyte. Usually the compound(s) of formula (I) are added in amounts yielding electrolyte compositions containing the above described concentrations of compound(s) of formula (I) in the inventive electrolyte composition (A). For use in lithium ion batteries compounds of formula (I) are preferred wherein Z is Al.

Another object of the present invention is an electrochemical cell comprising
(A) the electrolyte composition as described above in detail,
(B) at least one cathode comprising a cathode active material, and
(C) at least one anode comprising an anode active material.

According to a preferred embodiment of the present invention the electrochemical cell is a lithium ion battery. If the inventive electrochemical cell is a lithium ion battery, the compound of formula (I) contained in the electrolyte composition is preferably selected from compounds of formula (I) wherein Z is Al.

In the context of the present invention the term "lithium ion battery" means a rechargeable electrochemical cell wherein during discharge lithium ions move from the negative electrode (anode) to the positive electrode (cathode) and during charge the lithium ions move from the positive electrode to the negative electrode, i.e. the charge transfer is performed by lithium ions. Usually lithium ion batteries comprise as cathode active material a transition metal compound capable of occluding and releasing lithium ions, for example transition metal oxide compounds with layer structure like LiCoO₂, LiNiO₂, and LiMnO₂; transition metal phosphates having olivine structure like LiFePO₄ and LiMnPO₄; or lithium-manganese spinels which are known to the person skilled in the art in lithium ion battery technology.

The term "cathode active material" denotes the electrochemically active material in the cathode, in the case of lithium ion batteries the cathode active material may be a transition metal oxide intercalating/deintercalating lithium ions during charge/discharge of the battery. Depending on the state of the battery, i.e. charged or discharged, the cathode active material contains more or less lithium ions. The term "anode active material" denotes the electrochemically active material in the anode, in the case of lithium ion batteries the anode active material is a material capable of occluding and releasing lithium ions during charge/discharge of the battery.

The cathode (B) comprised within the electrochemical of the present invention comprises a cathode active material that can reversibly occlude and release lithium ions. Cathode active materials that can be used include, without being limited to, lithiated transition metal phosphates of olivine structure like LiFePO₄, LiCoPO₄, and LiMnPO₄; lithium ion intercalating transition metal oxides with layer structure like LiMnO₂, LiCoO₂, LiNiO₂ and especially those having the general formula Li_{(1+z)}[NiₐCo_{b}Mn_{c}]_{(1-z)}O₂₊ₑ wherein z is 0 to 0.3, a, b and c may be same or different and are independently 0 to 0.8 wherein a + b + c = 1 and -0.1 ≤ e ≤ 0.1; and lithiated transition metal mixed oxides of spinel structure.

In one preferred embodiment the cathode active material is LiCoPO₄. The cathode containing LiCoPO₄ as cathode active material may also be referred to as LiCoPO₄ cathode. The LiCoPO₄ may be doped with Fe, Mn, Ni, V, Mg, Al, Zr, Nb, TI, Ti, K, Na, Ca, Si, Sn, Ge, Ga, B, As, Cr, Sr, or rare earth elements, i.e., a lanthanide, scandium and yttrium. LiCoPO₄ with olivine structure is particularly suited according the present invention due to its high operating voltage (red-ox potential of 4.8 V vs. Li/Li⁺), flat voltage profile and a high theoretical capacity of about 170mAh/g. The cathode may comprise a LiCoPO₄/C composite material. The preparation of a suited cathode comprising a LiCoPO₄/C composite material is described in Markevich, Electrochem. Comm. 15, 2012, 22 to 25.

In another preferred embodiment of the present invention the cathode active material is selected from transition metal oxides with layer structure having the general formula Li_{(1+z)}[NiₐCo_{b}Mn_{c}]_{(1-z)}O₂₊ₑ wherein z is 0 to 0.3; a, b and c may be same or different and are independently 0 to 0.8 wherein a + b + c = 1; and -0.1 ≤ e ≤ 0.1. Examples for such transition metal oxides with layer structure include those in which [NiₐCo_{b}Mn_{c}] is selected from the group Ni_{0.33}Co_{0.33}Mn_{0.33}, Ni_{0.5}Co_{0.2}Mn_{0.3}, Ni_{0.33}Co₀Mn_{0.66}, Ni_{0.25}Co₀Mn_{0.75}, Ni_{0.35}Co_{0.15}Mn_{0.5}, Ni_{0,21}Co_{0,08}Mn_{0,71} and Ni_{0,22}Co_{0,12}Mn_{0,66}. Preferred are transition metal oxides with layer structure having the general formula Li_{(1+z)}[NiₐCo_{b}Mn_{c}]_{(1-z)}O₂₊ₑ wherein z is 0.05 to 0.3, a = 0.2 to 0.5, b = 0 to 0.3 and c = 0.4 to 0.8 wherein a + b + c = 1; and -0.1 ≤ e ≤ 0.1. Especially preferred the manganese-containing transition metal oxides with layer structure are selected from those in which [NiₐCo_{b}Mn_{c}] is selected from Ni_{0.33}Co₀Mn_{0.66}, Ni_{0.25}Co₀Mn_{0.75}, Ni_{0.35}Co_{0.15}Mn_{0.5}, Ni_{0,21}Co_{0,08}Mn_{0,71} and Ni_{0,22}Co_{0,12}Mn_{0,66}, in particular preferred are Ni_{0,21}Co_{0,08}Mn_{0,71} and Ni_{0,22}Co_{0,12}Mn_{0,66}.

According to a further preferred embodiment of the present invention the cathode active material is selected from lithiated transition metal mixed oxides of spinel structure. Those are those of general formula Li₁₊ₜM₂₋ₜO_{4-d} wherein d is 0 to 0.4, t is 0 to 0.4, while more than 60 mol% of M is manganese. Further M's, from which not more than 30 mol% is chosen, are one or more metals from groups 3 to 12 of the periodic table, for example Ti, V, Cr, Fe, Co, Ni, Zn, Mo, with preference being given to Co and Ni, and especially Ni. An example of a suited manganese-containing spinel of the general formula is LiNi_{0,5}Mn_{1,5}O_{4-d}.

Many elements are ubiquitous. For example, sodium, potassium and chloride are detectable in certain very small proportions in virtually all inorganic materials. In the context of the present invention, proportions of less than 0.5% by weight of cations or anions are disregarded. Any lithium ion-containing mixed transition metal oxide comprising less than 0.5% by weight of sodium is thus considered to be sodium-free in the context of the present invention. Correspondingly, any lithium ion-containing mixed transition metal oxide comprising less than 0.5% by weight of sulfate ions is considered to be sulfate-free in the context of the present invention.

The cathode may comprise one or more further constituents. For example, the cathode may comprise carbon in a conductive polymorph, for example selected from graphite, carbon black, carbon nanotubes, expanded graphite, graphene or mixtures of at least two of the aforementioned substances. In addition, the cathode may comprise one or more binders, for example one or more organic polymers like polyethylene, polyacrylonitrile, polybutadiene, polypropylene, polystyrene, polyacrylates, polyisoprene and copolymers of at least two comonomers selected from ethylene, propylene, styrene, (meth)acrylonitrile and 1,3-butadiene, especially styrene-butadiene copolymers, polyvinylidene fluoride (PVdF), polytetrafluoroethylene, copolymers of tetrafluoroethylene and hexafluoropropylene, copolymers of tetrafluoroethylene and vinylidene fluoride and polyacrylnitrile

Furthermore, the cathode may comprise a current collector which may be a metal wire, a metal grid, a metal web, a metal sheet, a metal foil or a metal plate. A suited metal foil is aluminum foil.

According to one embodiment of the present invention the cathode has a thickness of from 25 to 200 µm, preferably of from 30 to 100 µm, based on the whole thickness of the cathode without the thickness of the current collector.

The anode (C) comprised within the lithium ion of the present invention comprises an anode active material that can reversibly occlude and release lithium ions. Anode active materials that can be used include, without being limited to, carbonaceous material that can reversibly occlude and release lithium ions. Carbonaceous materials suited are crystalline carbon such as a graphite material, more particularly, natural graphite, graphitized cokes, graphitized MCMB, and graphitized MPCF; amorphous carbon such as coke, mesocarbon microbeads (MCMB) fired below 1500°C, and mesophase pitch-based carbon fiber (MPCF); hard carbon and carbonic anode active material (thermally decomposed carbon, coke, graphite) such as a carbon composite, combusted organic polymer, and carbon fiber.

Further anode active materials usable in the inventive electrochemical cells are lithium metal, or materials containing an element capable of forming an alloy with lithium. Non-limiting examples of materials containing an element capable of forming an alloy with lithium include a metal, a semimetal, or an alloy thereof. It should be understood that the term "alloy" as used herein refers to both alloys of two or more metals as well as alloys of one or more metals together with one or more semimetals. If an alloy has metallic properties as a whole, the alloy may contain a nonmetal element. In the texture of the alloy, a solid solution, a eutectic (eutectic mixture), an intermetallic compound or two or more thereof coexist. Examples of such metal or semimetal elements include, without being limited to, titanium (Ti), tin (Sn), lead (Pb), aluminum, indium (In), zinc (Zn), antimony (Sb), bismuth (Bi), gallium (Ga), germanium (Ge), arsenic (As), silver (Ag), hafnium (Hf), zirconium (Zr) yttrium (Y), and silicon (Si). Metal and semimetal elements of Group 4 or 14 in the long-form periodic table of the elements are preferable, and especially preferable are titanium, silicon and tin, in particular silicon. Examples of tin alloys include ones having, as a second constituent element other than tin, one or more elements selected from the group consisting of silicon, magnesium (Mg), nickel, copper, iron, cobalt, manganese, zinc, indium, silver, titanium (Ti), germanium, bismuth, antimony and chromium (Cr). Examples of silicon alloys include ones having, as a second constituent element other than silicon, one or more elements selected from the group consisting of tin, magnesium, nickel, copper, iron, cobalt, manganese, zinc, indium, silver, titanium, germanium, bismuth, antimony and chromium.

A further possible anode active material is silicon which is able to occlude and release lithium ions. The silicon may be used in different forms, e.g. in the form of nanowires, nanotubes, nanoparticles, films, nanoporous silicon, powder of crystalline silicon or silicon nanotubes. The silicon may be deposited on a current collector. The current collector may be a metal wire, a metal grid, a metal web, a metal sheet, a metal foil or a metal plate. Preferred the current collector is a metal foil, e.g. a copper foil. Thin films of silicon may be deposited on metal foils by any technique known to the person skilled in the art, e.g. by sputtering techniques. One possibility of preparing Si thin film electrodes are described in R. Elazari et al.; Electrochem. Comm. 2012, 14, 21-24. It is also possible to use a silicon/carbon composite as anode active material according to the present invention. The carbon is preferably selected from conductive carbon materials like graphite, carbon black, carbon nanotubes, expanded graphite, graphene or mixtures thereof.

Other possible anode active materials are lithium ion intercalating oxides of Ti.

Preferably the anode active material present in the inventive lithium ion battery is selected from carbonaceous material that can reversibly occlude and release lithium ions, particularly preferred the carbonaceous material that can reversibly occlude and release lithium ions is selected from crystalline carbon, hard carbon and amorphous carbon, in particular preferred is graphite. In another preferred embodiment the anode active material present in the inventive lithium ion secondary battery is selected from silicon that can reversibly occlude and release lithium ions, in particular silicon in form of thin films or silicon/carbon composites. In a further preferred embodiment the anode active material present in the inventive lithium ion secondary battery is selected from oxides of Ti which are able to occlude and release lithium ions. Further preference is given to lithium, lithium alloys and materials capable of forming lithium alloys.

The anode and cathode may be made by preparing an electrode slurry composition by dispersing the electrode active material, a binder, optionally a conductive material and a thickener, if desired, in a solvent and coating the slurry composition onto a current collector. The current collector may be a metal wire, a metal grid, a metal web, a metal sheet, a metal foil or a metal plate. Preferred the current collector is a metal foil, e.g. a copper foil or aluminum foil.

The inventive electrochemical cells may contain further constituents customary per se, for example output conductors, separators, housings, cable connections etc. Output conductors may be configured in the form of a metal wire, metal grid, metal mesh, expanded, metal, metal sheet or metal foil. Suitable metal foils are especially aluminum foils. Suited separators are for example glass fiber separators and polymer-based separators like polyolefin separators. The housing may be of any shape, for example cuboidal or in the shape of a cylinder. In another embodiment, inventive electrochemical cells have the shape of a prism. In one variant, the housing used is a metal-plastic composite film processed as a pouch.

The present invention therefore also further provides for the use of inventive electrochemical cells in devices, especially in mobile devices. Examples of mobile devices are vehicles, for example automobiles, bicycles, aircraft, or water vehicles such as boats or ships. Other examples of mobile devices are those which are portable, for example computers, especially laptops, telephones or electrical power tools, for example from the construction sector, especially drills, battery-driven screwdrivers or battery-driven tackers. The inventive electrochemical cells may also be used for stationary power storage.

The invention is illustrated by the following examples, which do not, however, restrict the invention.
(I) Preparation of the compounds of formula (I)

The compounds of formula (I) prepared are summarized in Table 1.

### (I.1) Preparation of lithium alkoxyaluminates

### Compounds 1 to 3: Li[Al(OR^{F})₄] with R^{F} = CH(CF₃)₂, C(CF₃)₃, C(CH₃)(CF₃)₂)

Li[Al(OR^{F})₄] with R^{F} = CH(CF₃)₂, C(CF₃)₃, C(CH₃)(CF₃)₂) were prepared by reacting purified LiAlH₄ and the appropriate commercially available alcohols (I. Krossing, Chem. Eur. J. (2001) Vol. 7 p. 490 and S. M. Ivanova et al., Chem. Eur. J. (2001) Vol. 7, p. 503.). Due to the very low boiling points of the alcohols, especially the perfluorinated HOC(CF₃)₃ (b.p. = 45°C), a double reflux condenser connected to a cryostat and set to a temperature of -20°C has been used. Instead of toluene hexane and heptane were used as solvent.

### (1.2) Preparation of lithium alkoxyborates

### Compound 4: Li[B(OCH(CF₃)₂)₄]

Li[B(OCH(CF₃)₂)₄] was prepared from LiBH₄ and HOCH(CF₃)₂. Dry toluene was added to a certain amount of LiBH₄. The lithium salt was only partially dissolved. As the reaction has a strong exothermal effect, the mixture had to be cooled to -10 °C. Then, an excess of HOCH(CF₃)₂ (5.5 equivalents) was added by gradually dropping. The mixture was allowed to return slowly to room temperature and was heated to 110 °C until no evolution of H₂ was observed any more. The proper use of a condenser at -20 °C was essential to avoid the [B(OCH(CF₃)₂)₃] loss during the heating process. When the reaction mixture returned to room temperature, a stoichiometric amount of the O-donor additive was added and the mixture was heated further two hours at 110 °C, 95 °C or 80 °C depending on the O-donor additive in use (ethylene carbonate (EC), dimethyl carbonate (DMC) or ethyl acetate (EA) respectively. Finally, the solvent was removed by reduced pressure and the product was filtered in a high-integrity glove box. The reaction works very well with yield exceeding 95 %.

### Compound 5: Li[B(OCH₂CF₃)₄]

LiBH₄ (184 mg; 8.40 mmol) was added to 80 ml of dimethoxyethane in a three neckled 250 ml flask equipped with a condenser. Afterwards, dry 1,1,1-trifluoroethanol (3.10 ml, 4.28 g, 428 mmol) was added during 30 minutes by a dropping funnel. After adding the alcohol the mixture was heated up to 90 °C for 4.5 h. After removal of the main part of the solvent by condensing technique the residual solvent was removed under reduced pressure (10-3 mbar). The product was obtained as a colorless solid in 71 % yield.

### Compound 6: Li[BOx(OCH(CF₃)₂)₂]

Dry acetonitrile (30 mL) was added to 32.1 g Li(EC)₄[B(OCH(CF₃)₂)₄] (30 mmol, 1.0 eq) at room temperature. 2.8 g of oxalic acid (30 mmol, 1 eq) were then added and the reaction mixture was stirred overnight at room temperature. The next day, NMR measurements confirmed the completed absence of [B(OCH(CF₃)₂)₄]⁻. The product was subjected under reduced pressure. A turbid liquid was obtained and was filtered under argon. Finally, a clear homogeneous liquid was obtained.

**Table 1**

| Compound | Lithium salt |
|---|---|
| 1 | Li[Al(OCH(CF₃)₂)₄] |
| 2 | Li[Al(OC(CF₃)₃)₄] |
| 3 | Li[Al(OC(CH₃)(CF₃)₂)]₄] |
| 4 | Li[B(OCH(CF₃)₂)₄] |
| 5 | Li[B(OCH₂CF₃)₄] |
| 6 | Li[BOx(OCH(CF₃)₂)₂] |
| Comparative 1 | LiPF₆ |

| | |
|---|---|
| Ox: Oxalato | |

### II. Conductivity

The measurements of the conductivity were performed in a glovebox with a dry argon atmosphere (< 0.1 ppm O₂, < 0.1 ppm H₂O). A Metrohm 712 Conductometer was used to record the values. The tempering was done with a metal heat block. The conductivity of Li[Al(OC(CF₃)₃)₄] (compound 2) in EC/DMC at 25 °C in dependence of the concentration is shown in Table 2. The conductivities of Li[B(OCH(CF₃)₂)₄] (compound 4) LiPF₆, and lithium bis(trifluormethansulfonyl)imide (LiTFSI) in different solvent mixtures at different temperatures are displayed in Table 3. The conductivity of Li[B(OCH₂CF₃)₄] (compound 5) based electrolytes at 25 °C is displayed in Table 4.

**Table 2: Concentration dependent conductivity of Li[Al(OC(CF₃)₃)₄] (compound 2) in EC/DMC at 25 °C**

| Concentration [mol/L] | Specific conductivity [mS/cm] |
|---|---|
| 0.42 | 4.9 |
| 0.47 | 5.5 |
| 0.5 | 5.5 |
| 0.54 | 5.3 |
| 0.57 | 5.2 |
| 0.61 | 4.8 |

**Table 3: Temperature dependent specific conductivity of electrolytes containing Li[B(OCH(CF₃)₂)₄] (compound 4), LiPF₆ or LiTFSI**

| Elektrolyte | Concentration [mol/L] | Temperature [°C] | Spec. conductivity [mS/cm] |
|---|---|---|---|
| Li[B(OCH(CF₃)₂)₄] / DMC | 1.84 | 25 | 0.5 |
| | | 80 | 3.0 |
| Li[B(OCH(CF₃)₂)₄] / DMC | 1.73 | 25 | 1.1 |
| | | 80 | 4.3 |
| Li[B(OCH(CF₃)₂)₄] / DMC | 0.89 | 25 | 5.9 |
| | | 80 | 11.6 |
| Li[B(OCH(CF₃)₂)₄] / EA | 1.63 | 25 | 2.7 |
| | | 70 | 5.6 |
| Li[B(OCH(CF₃)₂)₄] / EA | 0.77 | 25 | 8.3 |
| | | 70 | 12.8 |
| Li[B(OCH(CF₃)₂)₄] / EC | 1.95 | 25 | 0.3 |
| | | 80 | 2.9 |
| Li[B(OCH(CF₃)₂)₄] / EC | 1.06 | 25 | 2.9 |
| | | 80 | 8.1 |
| Li[B(OCH(CF₃)₂)₄] / EC / DMC | 1.82 | 25 | 0.4 |
| (1:1 by weight) | | 80 | 3.2 |
| Li[B(OCH(CF₃)₂)₄] / EC / DMC (1:1 by weight) | 0.96 | 25 | 4.9 |
| | | 80 | 10.8 |
| Li[PF₆] DMC | 3.13 | 25 | 6.0 |
| | | 80 | 14.8 |
| Li[PF₆] DMC | 1.17 | 25 | 5.2 |
| | | 80 | 7.9 |
| Li[PF₆] EA | 2.82 | 25 | 11.0 |
| | | 60 | 15.9 |
| Li[PF₆] EA | 1.02 | 25 | 7.3 |
| | | 60 | 8.3 |
| Li[PF₆] EC / DMC | 3.45 | 25 | 2.4 |
| | | 80 | 12.3 |
| Li[PF₆] EC / DMC | 1.30 | 25 | 9.7 |
| | | 80 | 20.0 |
| Li[PF₆] EC | 1.48 | 25 | 6.6 |
| | | 80 | 17.1 |
| Li[TFSI] DMC | 2.50 | 25 | 4.5 |
| | | 80 | 8.8 |
| Li[TFSI] DMC | 1.06 | 25 | 3.7 |
| | | 80 | 5.8 |
| Li[TFSI] EA | 2.25 | 25 | 8.1 |
| | | 70 | 11.5 |
| Li[TFSI] EA | 0.94 | 25 | 6.8 |
| | | 70 | 8.1 |
| Li[TFSI] EC | 3.06 | 25 | 1.4 |
| | | 80 | 6.5 |
| Li[TFSI] EC | 1.34 | 25 | 5.3 |
| | | 80 | 12.9 |
| Li[TFSI] EC / DMC | 2.78 | 25 | 3.1 |
| | | 80 | 9.3 |
| Li[TFSI] EC / DMC | 1.19 | 25 | 7.6 |
| | | 80 | 14.9 |

**Table 4: Specific conductivity [mS/cm] of Li[B(OCH₂CF₃)₄] (compound 5) based electrolytes at 25 °C**

| | concentration [mol/L] | | | | | | | | | |
|---|---|---|---|---|---|---|---|---|---|---|
| solvent | 1.0 | 0.9 | 0.8 | 0.7 | 0.6 | 0.5 | 0.4 | 0.3 | 0.2 | 0.1 |
| EC:DMC (1:1) | 0.289 | 0.322 | 0.341 | 0.365 | 0.382 | - | 0.383 | 0.406 | 0.411 | 0.405 |
| THF | 0.271 | 0.276 | 0.257 | 0.234 | 0.205 | - | - | - | - | - |
| EA | 0.179 | 0.189 | 0.197 | 0.184 | 0.163 | 0.100 | 0.077 | 0.050 | 0.022 | - |
| DMC | 0 | 0 | 0 | 0 | 0 | 0 | 0 | 0 | 0 | 0 |
| H₂O | 11.50 | 12.82 | 13.17 | 13.01 | 12.52 | 12.20 | 11.68 | - | - | - |
| Aceton | 4.16 | 4.51 | 4.86 | 4.68 | 4.79 | 4.58 | 4.20 | 3.82 | - | - |
| DME | 3.36 | 3.76 | 3.91 | 3.63 | 3.41 | - | - | - | - | - |
| DME:EC: DMC (1:1:1) | - | - | - | - | - | 1.56 | 2.22 | 2.38 | 2.15 | 1.38 |

| | | | | | | | | | | |
|---|---|---|---|---|---|---|---|---|---|---|
| -: not measured EC: Ethylene carbonate DMC: Dimethyl carbonate THF: Tetrahydrofurane EA: Acetic acid ethyl ester DME: Dimethoxyethane | | | | | | | | | | |

### III. Cell preparation and measurements

Three-electrode (Swagelock) Li-ion cells were constructed using new Li-aluminates salts. Cell composition: LiCoO₂ cathode // Li-salt in EC:DMC (50:50 by weight) as electrolyte // graphite anode. Cells were fully charged and discharged within 10 hours in galvanostatic mode, i.e. at a C-rate of 0.1 C between 3.0 V and 4.2V.

The relative capacity at 25 °C of electrolyte compositions containing 0.5 mol/L LiAl(OCH(CF₃)₂)₄ (compound 1) or LiAl(OC(CF₃)₃)₄ (compound 2) in a 1:1 mixture (by weight) of EC/DMC are shown in Table 5 in comparison to the same solvent mixture containing 1 mol/L LiPF₆ (comparative 1) as conducting salt. Cells containing LiAl(OC(CF₃)₃)₄ show capacity retention better than the reference salt LiPF₆. The capacity of the third cycle was used as reference for calculating the relative capacity of the respective cells.

**Table 5: Relative capacity at 25 °C**

| | 0.5 mol/L Li[Al(OCH(CF₃)₂)₄] in EC/DMC | 0.5 mol/L Li[Al(OC(CF₃)₃)₄] in EC/DMC | 1 mol/L Li[PF₆] in EC/DMC |
|---|---|---|---|
| Cycle | relative Capacity [%] | relative Capacity [%] | relative Capacity [%] |
| 3 | 100 | 100 | 100 |
| 4 | 98 | 100 | 99 |
| 5 | 97 | 100 | 99 |
| 6 | 95 | 100 | 98 |
| 7 | 93 | 99 | 98 |
| 8 | 90 | 99 | 98 |
| 9 | 88 | 99 | 98 |
| 10 | 90 | 88 | 74 |

The relative capacities of full cells cycled at C/10 after treatment at 80 °C for 1 week in fully charged state (4.2 V) are shown in Table 6. The cell containing LiAl(OCH(CF₃)₂)₄ (compound 1) shows capacities while the cells with the reference salt LiPF₆ or with LiAl(OC(CF₃)₃)₄ (compound 2) show practically no activity anymore. The relative capacities relate to the maximum capacity before tempering.

**Table 6: Relative capacity at 25 °C after treatment at 80 °C for 1 week in fully charged state (4.2 V).**

| | 0.5 mol/L Li[Al(OCH(CF₃)₂)₄] in EC/DMC | 0.5 mol/L Li[Al(OC(CF₃)₃)₄] in EC/DMC | 1 mol/L Li[PF₆] in EC/DMC |
|---|---|---|---|
| Cycle | relative Capacity [%] | relative Capacity [%] | relative Capacity [%] |
| 1 | 32 | 5 | 0 |
| 2 | 22 | 2 | 0 |
| 3 | 16 | 1 | 0 |
| 4 | 13 | 1 | 0 |
| 5 | 10 | 1 | 0 |
| 6 | 8 | 1 | 0 |
| 7 | 5 | 1 | 0 |
| 8 | 4 | 1 | 1 |
| 9 | 4 | 1 | 1 |
| 10 | 3 | 0 | 1 |

The relative capacities of full cells cycled at C/10 after treatment at 80 °C for 1 week in the discharged state (3.0 V) are shown in Table 7. Cells containing LiAl(OCH(CF₃)₂)₄ (compound 1) or LiAl(OC(CF₃)₃)₄ (compound 2) show capacities higher than the cell with the reference salt LiPF₆. The values relate to the maximum capacity before tempering.

**Table 7: Relative capacity at 25 °C after treatment at 80 °C for 1 week in the discharged state (3.0 V)**

| | 0.5 mol/L Li[Al(OCH(CF₃)₂)₄] in EC/DMC | 0.5 mol/L Li[Al(OC(CF₃)₃)₄] in EC/DMC | 1 mol/L Li[PF₆] in EC/DMC |
|---|---|---|---|
| Cycle | relative Capacity [%] | relative Capacity [%] | relative Capacity [%] |
| 3 | 91 | 90 | 75 |
| 4 | 91 | 90 | 76 |
| 5 | 92 | 90 | 75 |
| 6 | 93 | 91 | 76 |
| 7 | 91 | 90 | 75 |
| 8 | 91 | 90 | 75 |
| 9 | 91 | 89 | 74 |
| 10 | 90 | 88 | 74 |

A pouch cell was constructed using Li[B(OCH(CF₃)₂)₄] (compound 4) as conducting salt. LiNi_{0.33}Mn_{0.33}Co_{0.33}O₂ was used as cathode active material, 1 mol of the Li-salt in EC:DMC (50:50 by weight) as electrolyte, a graphite anode and a Tonen separator. In the first cycle cells were fully charged and discharged within 10 hours in galvanostatic mode, i.e. at a C-rate of 0.1 C between 3.0 V and 4.2V. Later on the cell was cycled at 0.3 C and 25 °C. The specific

**Table 8: Discharge capacity at room temperature of 1 mol/L Li[B(OCH(CF₃)₂)₄] in EC/DMC in a LiNi_{0.33}Mn_{0.33}Co_{0.33}O₂/graphite pouch cell**

| Cycle | discharge capacity [mAh] |
|---|---|
| 1 | 33.5 |
| 5 | 41.3 |
| 50 | 40.9 |
| 100 | 39.3 |
| 150 | 37.7 |
| 190 | 36.9 |

### IV. Stability against hydrolysis

The tendency for hydrolyses of some of the compounds are determined via ¹H-NMR-analysis. The results are shown in Table 9.

**Table 9: Hydrolysis tendency.**

| Compound | hydrolysis |
|---|---|
| Li[Al(OCH(CF₃)₂)₄] | yes |
| Li[Al(OC(CF₃)₃)₄] | no |
| Li[B(OCH(CF₃)₂)₄] | slightly (after several days) |
| Li[B(OCH₂CF₃)₄] | no |

## Claims

1. An electrolyte composition (A) containing
(i) at least one aprotic organic solvent,
(ii) at least one compound of formula (I) 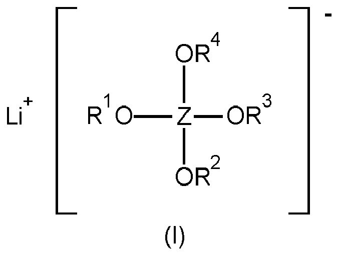 wherein
Z is Al or B;
R¹, R², R³, and R⁴ are selected independently from each other from C(O)R⁵, C₁-C₁₀ alkyl, C₂-C₁₀ alkenyl, C₂-C₁₀ alkynyl, C₃-C₁₀ cycloalkyl, C₆-C₁₄ aryl and C₅-C₁₄ heteroaryl, wherein alkyl, alkenyl, alkynyl, cycloalkyl, aryl, and heteroaryl may be substituted by one or more F, and/or by one or more optionally fluorinated groups selected from C₁-C₄ alkyl, C₂-C₄ alkenyl, C₂-C₄ alkynyl, phenyl, and benzyl,
or R¹ and R² are selected independently from each other from C(O) and C₁-C₃ alkylene and form together with the joining group OZO a 5- to 7-membered hetero cycle, wherein alkylene may be substituted by one or more F, and/or by one or more optionally fluorinated groups selected from C₁-C₄ alkyl, phenyl, and benzyl, and R³ and R⁴ are selected as defined above,
R⁵ is selected from C₁-C₁₀ alkyl, C₂-C₁₀ alkenyl, C₂-C₁₀ alkynyl, C₃-C₁₀ cycloalkyl, C₆-C₁₄ aryl and C₅-C₁₄ heteroaryl, wherein alkyl, alkenyl, alkynyl, cycloalkyl, aryl, and heteroaryl may be substituted by one or more F, and/or by one or more optionally fluorinated groups selected from C₁-C₄ alkyl, phenyl, and benzyl, and
wherein at least one of R¹, R², R³, and R⁴ carries at least one F;
(iii) optionally at least one conducting salt different from the compound of formula (I), and
(iv) optionally at least one further additive.

2. The electrolyte composition according to claim 1, wherein the at least one compound of formula (I) is selected from compounds of formula (I) wherein
R¹, R², R³, and R⁴ are selected independently from each other from C₁-C₆ alkyl and C(O)C₁-C₆ alkyl, and wherein at least one alkyl is substituted by one or more F,
or R¹ and R² are selected independently from each other from C(O) and C₁-C₃ alkylene and form together with the joining group OZO a 5- to 7-membered hetero cycle, wherein alkylene may be substituted by one or more F, C₁-C₄ alkyl, and/or C₁-C₄ alkyl substituted by one or more F, and R³ and R⁴ are selected from optionally fluorinated C₁-C₆ alkyl and C(O)C₁-C₆ alkyl, wherein at least one of R¹, R², R³, and R⁴ carries at least one F.

3. The electrolyte composition according to claim 1 or 2, wherein the at least one compound of formula (I) is selected from compounds of formula (I) wherein at least one of R¹, R², R³, and R⁴ contains at least one CF₃-group.

4. The electrolyte composition according to any of claims 1 to 3, wherein the at least one compound of formula (I) is selected from compounds of formula (I) wherein
Z is B,
R¹ and R² are selected independently from each other from C(O) and C₁-C₃ alkylene and form together with the joining group OZO a 5- to 7-membered hetero cycle, wherein alkylene may be substituted by one or more F, and/or by one or more optionally fluorinated groups selected from C₁-C₄ alkyl, phenyl, and benzyl, and
R³ and R⁴ are selected independently from each other from optionally fluorinated C₁-C₆ alkyl, and
wherein at least one of R¹, R², R³, and R⁴ carries at least one F.

5. The electrolyte composition according to any of claims 1 to 4, wherein the at least one compound of formula (I) is selected from compounds of formula (I) wherein
Z is Al, and
R¹, R², R³, and R⁴ are selected independently from each other from C₁-C₆ alkyl wherein at least one alkyl is substituted by one or more F.

6. The electrolyte composition according to any of claims 1 to 5, wherein the at least one compound of formula (I) is selected from Li[B(OC(O)C(O)O)(OCH(CF₃)₂)₂], Li[B(OCH(CF₃)₂)₄], Li[B(OCH₂CF₃)₄], Li[Al(OCH(CF₃)₂)₄], Li[Al(OC(CH₃)(CF₃)₂)₄], and Li[Al(OC(CF₃)₃)₄].

7. The electrolyte composition according to any of claims 1 to 6, wherein the at least one aprotic organic solvent (i) is selected from
(a) cyclic and noncyclic organic carbonates, which may be partly halogenated,
(b) di-C₁-C₁₀-alkylethers, which may be partly halogenated,
(c) di-C₁-C₄-alkyl-C₂-C₆-alkylene ethers and polyethers, which may be partly halogenated,
(d) cyclic ethers, which may be partly halogenated,
(e) cyclic and acyclic acetales and ketales, which may be partly halogenated,
(f) orthocarboxylic acids esters, which may be partly halogenated, and
(g) cyclic and noncyclic esters of carboxylic acids, which may be partly halogenated
(h) cyclic and noncyclic sulfones, which may be partly halogenated,
(i) cyclic and noncyclic nitriles and dinitriles, which may be partly halogenated, and
(j) ionic liquids, which may be partly halogenated.

8. The electrolyte composition according to any of claims 1 to 7, wherein the electrolyte composition contains at least one conducting salt (iii) different from the compound of formula (I) the at least one conducting salt (iii) being selected from the group consisting of
• Li[F₆₋ₓP(C_{y}F_{2y+1})x], wherein x is an integer in the range from 0 to 6 and y is an integer in the range from 1 to 20;
Li[B(R^{I})₄], Li[B(R^{I})₂(OR^{II}O)] and Li[B(OR^{II}O)₂] wherein each R^{I} is independently from each other selected from F, Cl, Br, I, C₁-C₄ alkyl, C₂-C₄ alkenyl, and C₂-C₄ alkynyl, wherein alkyl, alkenyl, and alkynyl may be substituted by one or more OR^{III}, wherein R^{III} is selected from C₁-C₆ alkyl, C₂-C₆ alkenyl, and C₂-C₆ alkynyl, and (OR^{II}O) is a bivalent group derived from a 1,2- or 1,3-diol, a 1,2- or 1,3-dicarboxlic acid or a 1,2- or 1,3-hydroxycarboxylic acid, wherein the bivalent group forms a 5- or 6-membered cycle via the both oxygen atoms with the central B-atom;
• salts of the general formula Li[X(CₙF₂ₙ₊₁SO₂)ₘ], where m and n are defined as follows:
m = 1 when X is selected from oxygen and sulfur,
m = 2 when X is selected from nitrogen and phosphorus,
m = 3 when X is selected from carbon and silicon, and
n is an integer in the range from 1 to 20,
• LiClO₄; LiAsF₆; LiCF₃SO₃; Li₂SiF₆; LiSbF₆; LiAlCl₄, lithium tetrafluoro (oxalato) phosphate; and lithium oxalate.

9. The electrolyte composition according to any of claims 1 to 8, wherein the electrolyte composition contains at least one further additive (iv) which is selected from the group consisting of vinylene carbonate and its derivatives, vinyl ethylene carbonate and its derivatives, methyl ethylene carbonate and its derivatives, lithium (bisoxalato) borate, lithium difluoro (oxalato) borate, lithium tetrafluoro (oxalato) phosphate, lithium oxalate, 2-vinyl pyridine, 4-vinyl pyridine, cyclic exo-methylene carbonates, sultones, cyclic and acyclic sulfonates, cyclic and acyclic sulfites, cyclic and acyclic sulfinates, organic esters of inorganic acids, acyclic and cyclic alkanes having a boiling point at 1 bar of at least 36 °C, and aromatic compounds, optionally halogenated cyclic and acyclic sulfonylimides, optionally halogenated cyclic and acyclic phosphate esters, optionally halogenated cyclic and acyclic phosphines, optionally halogenated cyclic and acyclic phosphites including, optionally halogenated cyclic and acyclic phosphazenes, optionally halogenated cyclic and acyclic silylamines, optionally halogenated cyclic and acyclic halogenated esters, optionally halogenated cyclic and acyclic amides, optionally halogenated cyclic and acyclic anhydrides, optionally halogenated organic heterocycles.

10. The electrolyte composition according to any of claims 1 to 9, wherein the electrolyte composition contains
(i) from 60 to 99.99 wt.-% of at least one aprotic organic solvent,
(ii) from 0.01 to 40 wt.-% of at least one compound of formula (I),
(iii) from 0 to 25 wt.-% of at least one conducting salt different from the at least one compound of formula (I), and
(iv) from 0 to 10 wt.-% of at least one further additive,
based on the total weight of the electrolyte composition.

11. The use of at least one compound of formula (I) 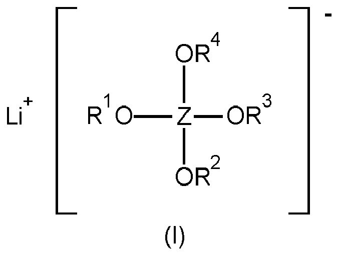 wherein
Z is Al or B;
R¹, R², R³, and R⁴ are selected independently from each other from C(O)R⁵, C₁-C₁₀ alkyl, C₂-C₁₀ alkenyl, C₂-C₁₀ alkynyl, C₃-C₁₀ cycloalkyl, C₆-C₁₄ aryl and C₅-C₁₄ heteroaryl, wherein alkyl, alkenyl, alkynyl, cycloalkyl, aryl, and heteroaryl may be substituted by one or more F, and/or by one or more optionally fluorinated groups selected from C₁-C₄ alkyl, C₂-C₄ alkenyl, C₂-C₄ alkynyl, phenyl, and benzyl,
or R¹ and R² are selected independently from each other from C(O) and C₁-C₃ alkylene and form together with the joining group OZO a 5- to 7-membered saturated or unsaturated cycle, wherein alkylene may be substituted by one or more F, and/or by one or more optionally fluorinated groups selected from C₁-C₄ alkyl, phenyl, and benzyl, and R³ and R⁴ are selected as defined above,
R⁵ is selected from C₁-C₁₀ alkyl, C₂-C₁₀ alkenyl, C₂-C₁₀ alkynyl, C₃-C₁₀ cycloalkyl, C₆-C₁₄ aryl and C₅-C₁₄ heteroaryl, wherein alkyl, alkenyl, alkynyl, cycloalkyl, aryl, and heteroaryl may be substituted by one or more F, and/or by one or more optionally fluorinated groups selected from C₁-C₄ alkyl, phenyl, and benzyl, and
wherein at least one of R¹, R², R³, and R⁴ carries at least one F;
as conducting salts for electrolytes in electrochemical cells.

12. An electrochemical cell
(A) the electrolyte composition according to any of claims 1 to 10,
(B) at least one cathode comprising a cathode active material, and
(C) at least one anode comprising an anode active material.

13. The electrochemical cell according to claim 12, which is a lithium ion battery.

14. The lithium ion battery according to claim 12 or 13 wherein the at least one cathode active material comprises a material capable of occluding and releasing lithium ions selected from lithiated transition metal phosphates of olivine structure; lithium ion intercalating transition metal oxides with layer structure; and lithiated transition metal mixed oxides of spinel structure.

15. The lithium ion battery according to any of claims 12 to 15, wherein the at least one anode active material is a material that can reversibly occlude and release lithium ions selected from lithium ion intercalating carbonaceous material, lithium ion intercalating oxides of Ti, and silicon.
